# EUROPÄISCHE PATENTSCHRIFT

(11) **EP 1 097 064 B1**
(45) Veröffentlichungstag und Bekanntmachung des Hinweises auf die Patenterteilung: **21.05.2003**
(21) Anmeldenummer: 99934694.3
(22) Anmeldetag: 14.07.1999
(51) Int. Cl.: B60R 21/20, B60R 21/16

(54) **RÜCKHALTEMODUL FÜR EIN KRAFTFAHRZEUG**
RESTRAINT MODULE FOR A MOTOR VEHICLE
MODULE DE RETENUE POUR UN VEHICULE A MOTEUR

(30) Priorität: 16.07.1998 DE 29812708 U
(43) Veröffentlichungstag der Anmeldung: 09.05.2001
(73) Patentinhaber: TRW Occupant Restraint Systems GmbH & Co. KG, 73553 Alfdorf (DE)
(72) Erfinder: FISCHER, Anton, D-73579 Leinweiler (DE)
(74) Vertreter: Sties, Jochen, Dipl.-Ing.
(86) Internationale Anmeldenummer: EP9904975
(87) Internationale Veröffentlichungsnummer: WO00003897

(56) Entgegenhaltungen:
- DE-U- 29 716 573
- FR-A- 2 122 189
- FR-A- 2 142 464

## Beschreibung

Die Erfindung betrifft ein Rückhaltemodul für ein Kraftfahrzeug, mit einer Druckgasquelle und einem mit dieser in Strömungsverbindung stehenden, langgestreckten Seitenaufprall-Gassack, der mittels Druckgas aus einem zusammengelegten, in einem Schußkanal angeordneten Zustand in einen entfalteten Zustand überführt werden kann, in welchem ein Längsrand des Gassacks sich frei im Inneren des Kraftfahrzeugs erstreckt, wobei die beiden Enden dieses Längsrandes des Gassacks jeweils mit einem fahrzeugfesten Abspannpunkt verbindbar sind und eine Spannvorrichtung vorgesehen ist, die mit einem der Enden des Längsrandes zusammenwirkt.

Ein solches Rückhaltemodul ist aus dem deutschen Gebrauchsmuster 297 16 573 bekannt. Die Spannvorrichtung dient dazu, den sich frei im Inneren des Kraftfahrzeugs erstreckenden, unteren Längsrand des Gassacks gespannt zu halten, wenn der Gassack entfaltet ist. Dies gewährleistet, daß der Gassack auch dann noch eine Schutzwirkung bei einem Seitenaufprall bietet, wenn das Druckgas bereits teilweise aus dem Gassack entwichen ist, beispielsweise bei einem vorhergehenden Aufprall oder bei einem Überschlag des Fahrzeugs, bei dem es zu einer Vielzahl von Kontakten zwischen dem Fahrzeuginsassen und dem Gassack kommen kann.

Bei dem aus dem oben genannten Gebrauchsmuster bekannten Rückhaltemodul besteht die Spannvorrichtung aus einer Zugfeder, die zwischen einem der Enden des Längsrandes des Gassacks und einem Abspannpunkt am Fahrzeug angeordnet ist. Nachteilig bei dieser Konstruktion ist die geringe konstruktive Freiheit hinsichtlich der Ausgestaltung der Spannvorrichtung, da am vorgesehenen Anbringungsort nur wenig Platz zur Verfügung steht, und außerdem das Verletzungsrisiko, das von diesem vergleichsweise schweren Bauteil ausgeht, das im Innenraum des Fahrzeugs in einem Bereich angeordnet ist, in welchem bei einem Seitenaufprall die Gefahr eines Auftreffens des Fahrzeuginsassens besteht.

Die Erfindung schafft ein Rückhaltemodul der eingangs genannten Art, das zum einen eine große konstruktive Freiheit bei der Auslegung der Spannvorrichtung bietet und zum anderen das Verletzungsrisiko, das von der Spannvorrichtung ausgehen könnte, beseitigt. Gemäß der Erfindung ist bei einem Rückhaltemodul der eingangs genannten Art vorgesehen, daß die Spannvorrichtung am Schußkanal angeordnet und mit dem besagten Ende des Längsrandes über ein Zugmittel verbunden ist, das an einem fahrzeugfesten Punkt umgelenkt wird. Die Spannvorrichtung ist somit in einem Bereich angeordnet, der geschützt und nicht zugänglich hinter der Dachverkleidung des Fahrzeugs liegt. In diesem Bereich kann eine beliebige, geeignete Spannvorrichtung angeordnet werden, die dann über das Zugmittel auf den Gassack einwirkt und diesen im Bedarfsfall spannt. Ein zusätzlicher Vorteil der erfindungsgemäßen Ausgestaltung besteht darin, daß in vorteilhafter Weise das Druckgas, das im Schußkanal wirkt, um den Gassack zu entfalten, zum Auslösen der Spannvorrichtung verwendet werden kann. Eine separate Vorrichtung zum Aktivieren der Spannvorrichtung ist somit nicht mehr erforderlich.

Vorteilhafte Ausgestaltungen der Erfindung ergeben sich aus den Unteransprüchen.

Die Erfindung wird nachfolgend unter Bezugnahme auf zwei bevorzugte Ausführungsformen beschrieben, die in den beigefügten Zeichnungen dargestellt sind. In diesen zeigen:
- Figur 1 in einer schematischen perspektivischen Ansicht ein erfindungsgemäßes Rückhaltemodul, das in einem Fahrzeug angebracht ist;
- Figur 2 in einem schematischen Längsschnitt eine Spannvorrichtung zusammen mit einem Zugmittel, die bei einem Rückhaltemodul gemäß einer ersten Ausführungsform verwendet werden kann; und
- Figur 3 in einer schematischen, perspektivischen Ansicht eine Spannvorrichtung, die bei einer zweiten Ausführungsformdes Rückhaltemoduls verwendet werden kann.

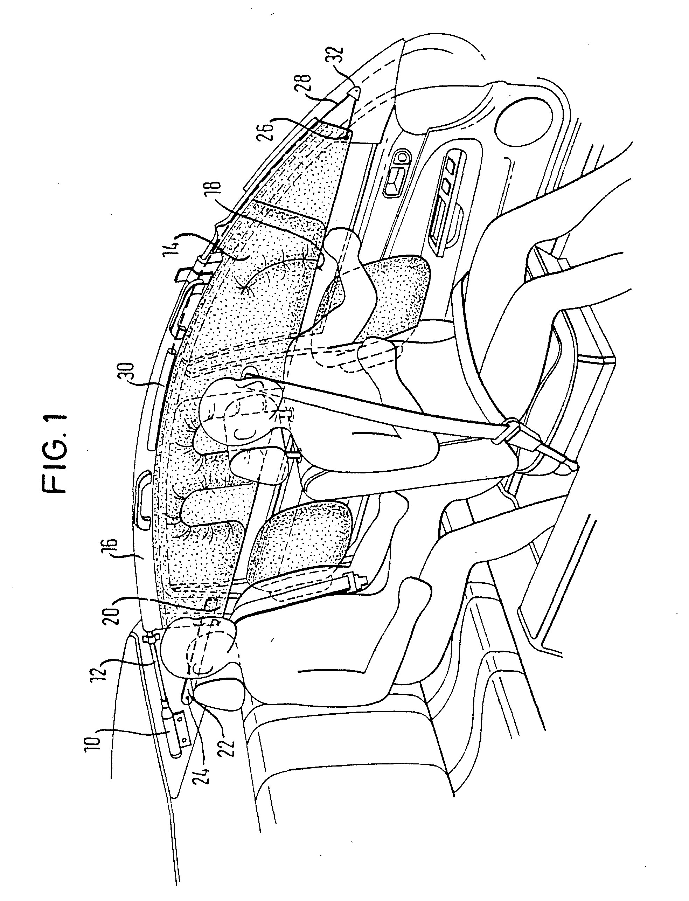

In Figur 1 ist ein erfindungsgemäßes Rückhaltemodul zu sehen. Dieses besteht aus einer Druckgasquelle 10, die über ein Verbindungsrohr 12 mit einem Gassack 14 in Strömungsverbindung steht, der im nicht aktivierten, zusammengelegten Zustand in einem Schußkanal 16 angeordnet ist. Nach Aktivierung der Druckgasquelle 10 wird der Gassack entfaltet, so daß er sich entlang einer Seitenstruktur eines Fahrzeugs in dem in Figur 1 gezeigten Zustand befindet. In diesem Zustand erstreckt sich ein Längsrand 18 des Gassacks frei im Innenraum. An einem Ende dieses Längsrandes 18, nämlich am hinteren Ende 20, greift ein Spannband 22 an, das mit einem Abspannpunkt 24 an der Fahrzeugkarosserie verbunden ist. Am vorderen Ende 26 des Längsrandes 18 des Gassacks greift ein Zugmittel 28 an, das mit einer Spannvorrichtung 30 verbunden ist. Die Spannvorrichtung 30 ist am Schußkanal 16 etwa in dessen Mitte angeordnet. Im Bereich der A-Säule des Fahrzeugs ist ein Umlenkpunkt 32 vorgesehen, der das Zugmittel 28 umlenkt, so daß auf das vordere Ende 26 des Gassacks eine bezüglich des Fahrzeugs nach vorne gerichtete Zugkraft aufgebracht werden kann.

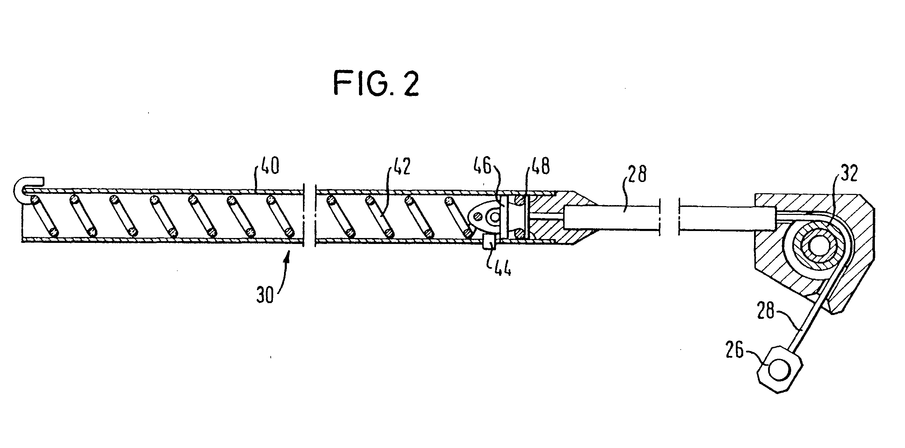

In Figur 2 ist die Spannvorrichtung gemäß einer ersten Ausführungsform im Detail zu sehen. Die Spannvorrichtung 30 besteht aus einem Hohlzylinder 40, in welchem eine Zugfeder 42 mittels eines Sperrelements 44 in einem vorgespannten Zustand gehalten werden kann. Zwischen der Zugfeder 42 und dem Zugmittel, das hier beispielsweise als Bowdenzug ausgebildet ist, ist als Rücklaufsperre ein Konus 46 angeordnet, auf dem ein Blockierring 48 vorgesehen ist.

Wenn das Sperrelement 44 aus seiner in Figur 2 gezeigten Sperrstellung in eine Freigabestellung überführt wird, kann sich die Zugfeder 42 zusammenziehen, wobei dann über das Zugmittel 28 eine das vordere Ende 26 des Gassacks nach vorne beaufschlagende Kraft ausgeübt wird. Eine Rückbewegung im Sinne einer Verlängerung der Zugfeder 42 wird mittels des Konus 46 und des Blockierrings 48 verhindert, der sich bei einer Rücklaufbewegung zwischen dem Konus und der Innenwand des Hohlzylinders 40 verkeilt.

Das Sperrelement 44 kann von einem beliebigen geeigneten Mechanismus aus seiner Sperrstellung in eine Freigabestellung überführt werden. Besonders geeignet ist ein druckgasbetätigter Mechanismus, der dann, wenn die Druckgasquelle 10 ein Druckgas zum Entfalten des Gassacks 14 bereitstellt, die Spannvorrichtung 30 aktiviert. Ein solcher Mechanismus kann beispielsweise ein kleiner Betätigungskolben in einem Hohlzylinder sein, der mit dem Innenraum des Schußkanals 16 in Strömungsverbindung steht.

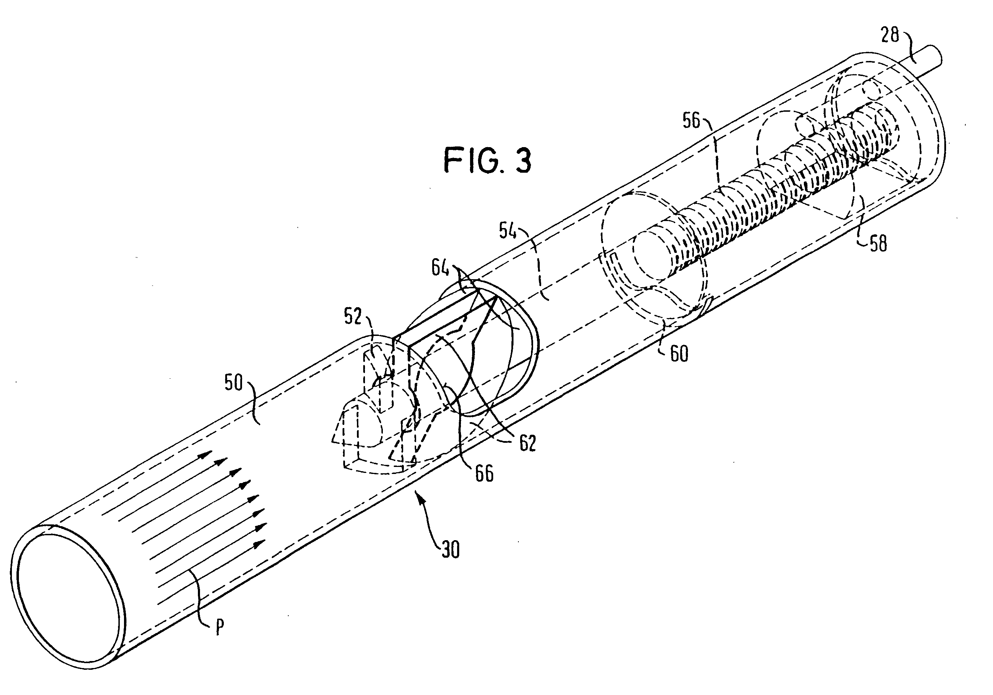

In Figur 3 ist eine Spannvorrichtung gemäß einer zweiten Ausführungsform der Erfindung gezeigt. Die Spannvorrichtung besteht hier aus einem Hohlzylinder 50, in dessen Innenraum ein Turbinenrad 52 auf einer Welle 54 gelagert ist, die ein Bewegungsgewinde 56 aufweist. Auf dem Bewegungsgewinde 56 ist eine Mutter 58 angeordnet, an der das Zugmittel 28 befestigt ist. Die Welle 54 ist in einer Lagerscheibe 60 sowie einem Lager 62 gelagert. Hinter dem Turbinenrad 52 ist eine Gasführungsschräge 64 angeordnet, mittels dem das durch das Turbinenrad geströmte Druckgas aus dem Hohlzylinder 50 herausgeleitet werden kann. Zu diesem Zweck ist eine Gasaustrittsöffnung 66 vorgesehen.

Wenn die Druckgasquelle 10 aktiviert wird, strömt ein Teil des von ihr bereitgestellten Druckgases (angedeutet durch die Pfeile P) über eine Strömungsverbindung in das Innere des Hohlzylinders 50 ein und versetzt das Turbinenrad 52 in Drehung. Auf diese Weise wird die Mutter 58 auf dem Bewegungsgewinde 56 verschraubt, so daß das Zugmittel 28 in den Hohlzylinder 50 hineingezogen wird und so auf das vordere Ende 26 des Gassacks eine Zugwirkung auswirkt.

## Patentansprüche

1. Rückhaltemodul für ein Kraftfahrzeug, mit einer Druckgasquelle (10) und einem mit dieser in Strömungsverbindung stehenden, langgestreckten Seitenaufprall-Gassack (14), der mittels Druckgas aus einem zusammengelegten, in einem Schußkanal (16) angeordneten Zustand in einen entfalteten Zustand überführt werden kann, in welchem ein Längsrand (18) des Gassacks (14) sich frei im Inneren des Kraftfahrzeugs erstreckt, wobei die beiden Enden (20, 26) dieses Längsrandes (18) des Gassacks (14) jeweils mit einem fahrzeugfesten Abspannpunkt (24, 32) verbindbar sind und eine Spannvorrichtung (30) vorgesehen ist, die mit einem der Enden des Längsrandes (18) zusammenwirkt,
**dadurch gekennzeichnet, daß** die Spannvorrichtung (30) am Schußkanal (16) angeordnet und mit dem besagten Ende (26) des Längsrandes (18) über ein Zugmittel (28) verbunden ist, das an einem fahrzeugfesten Punkt (32) umgelenkt wird.

2. Rückhaltemodul nach Anspruch 1, **dadurch gekennzeichnet, daß** die Spannvorrichtung (30) von dem Druckgas aktivierbar ist.

3. Rückhaltemodul nach einem der Ansprüche 1 und 2, **dadurch gekennzeichnet, daß** das Zugmittel ein Bowdenzug (28) ist.

4. Rückhaltemodul nach einem der vorhergehenden Ansprüche, **dadurch gekennzeichnet, daß** die Spannvorrichtung (30) eine Zugfeder (42) aufweist, die in einem vorgespannten Zustand von einem Sperrelement (44) gehalten wird, das mittels des Druckgases aus einer Sperrstellung, in der die Zugfeder (42) vorgespannt gehalten wird, in eine Freigabestellung überführt werden kann, in der die Zugfeder (42) freigegeben ist.

5. Rückhaltemodul nach Anspruch 4, **dadurch gekennzeichnet, daß** zwischen der Zugfeder (42) und dem Zugmittel (28) eine Rücklaufsperre (46, 48) angeordnet ist.

6. Rückhaltemodul nach Anspruch 5, **dadurch gekennzeichnet, daß** die Zugfeder (42) in einem Hohlzylinder (40) angeordnet ist, daß die Rücklaufsperre einen Konus (46) aufweist und daß auf dem Konus ein Blockierring (48) derart angeordnet ist, daß er sich bei einer Bewegung des Konus (46) im Sinne einer Verlängerung der Zugfeder (42) zwischen der Wandung des Hohlzylinders (40) und dem Konus (46) verklemmt.

7. Rückhaltemodul nach einem der Ansprüche 1 bis 3, **dadurch gekennzeichnet, daß** die Spannvorrichtung ein Turbinenrad (52) aufweist, das mit einer Bewegungsschraube (56) gekoppelt ist, und daß auf der Bewegungsschraube (56) eine Mutter (58) angeordnet ist, an die das Zugmittel (28) angeschlossen ist.

8. Rückhaltemodul nach Anspruch 7, **dadurch gekennzeichnet, daß** das Turbinenrad (52) in einem Hohlzylinder (50) angeordnet ist, der mit der Druckgasquelle in Strömungsverbindung steht, und daß der Hohlzylinder (50) eine Ableitung (62, 66) für das durch das Turbinenrad (52) strömende Druckgas aufweist.

## Claims

1. A restraint module for a motor vehicle, comprising a compressed gas source (10) and an elongated side impact gas bag (14) which is in fluid communication therewith and which is translatable by means of compressed gas from a folded condition in which it is arranged in an ejection channel (16) into a deployed condition in which a longitudinal edge (18) of the gas bag (14) freely extends in the interior of the motor vehicle, each of the two ends (20, 26) of this longitudinal edge (18) of the gas bag (14) being connectable to a vehicle-fixed tensioning point (24, 32), and a tensioning device (30) being provided cooperating with one of the ends of the longitudinal edge (18),
**characterized in that** the tensioning device (30) is arranged on the ejection channel (16) and is connected to said end (26) of the longitudinal edge (18) via a traction means (28) which is deflected at a vehicle-fixed point (32).

2. The restraint module as set forth in claim 1, **characterized in that** the tensioning device (30) is activatable by the compressed gas.

3. The restraint module as set forth in any of claims 1 and 2, **characterized in that** the traction means is a Bowden cable (28).

4. The restraint module as set forth in any of the preceding claims, **characterized in that** the tensioning device (30) comprises a tension spring (42) maintained in a pretensioned condition by a blocking element (44) which by means of the compressed gas may be transferred from a blocking position in which the tension spring (42) is maintained pretensioned, into a released position in which the tension spring (42) is released.

5. The restraint module as set forth in claim 4, **characterized in that** a return stop (46, 48) is arranged between the tension spring (42) and the traction means (28).

6. The restraint module as set forth in claim 5, **characterized in that** the tension spring (42) is arranged in a hollow cylinder (40), that the return stop comprises a cone (46), and that a blocking ring (48) is arranged on the cone such that the blocking ring wedges between the wall of the hollow cylinder (40) and the cone (46) on movement of the cone (46) in the sense of an elongation of the tension spring (42).

7. The restraint module as set forth in any of the claims 1 to 3, **characterized in that** the tensioning device comprises a turbine wheel (52) coupled to a movement screw (56), and that arranged on the movement screw (56) is a nut (58) to which the traction means (28) is connected.

8. The restraint module as set forth in claim 7, **characterized in that** the turbine wheel (52) is arranged in a hollow cylinder (50) which is in fluid communication with the compressed gas source, and that the hollow cylinder (50) comprises an exit conduit (62, 66) for the compressed gas flowing through the turbine wheel (52).

## Revendications

1. Module de retenue pour un véhicule, comportant une source de gaz sous pression (10) et un coussin à gaz de choc latéral (14) allongé qui est en liaison d'écoulement avec celui-ci, lequel peut être amené au moyen du gaz sous pression depuis un état replié, dans lequel il est agencé dans un canal d'éjection (16), jusque dans un état déplié, dans lequel un bord longitudinal (18) du coussin à gaz (14) s'étend librement à l'intérieur du véhicule, les deux extrémités (20, 26) de ce bord longitudinal (18) du coussin à gaz (14) pouvant être chacune reliée à un point d'ancrage (24, 32) solidaire du véhicule, et un dispositif de tension (30) étant prévu en coopérant avec les extrémités du bord longitudinal (18), **caractérisé en ce que** le dispositif de tension (30) est agencé sur le canal d'éjection (16) et relié à ladite extrémité (26) du bord longitudinal (18) par un moyen de traction (28) qui change de direction au niveau d'un point (32) solidaire du véhicule.

2. Module de retenue selon la revendication 1, **caractérisé en ce que** le dispositif de tension (30) peut être activé par le gaz sous pression.

3. Module de retenue selon l'une des revendications 1 et 2, **caractérisé en ce que** le moyen de traction est un câble Bowden (28).

4. Module de retenue selon l'une des revendications précédentes, **caractérisé en ce que** le dispositif de tension (30) présente un ressort de traction (42) qui est maintenu dans un état précontraint par un élément de blocage (44) qui est peut être amené au moyen du gaz sous pression depuis une position de blocage dans laquelle le ressort de traction (42) est précontraint jusque dans une position de libération dans laquelle le ressort de traction (42) est libéré.

5. Module de retenue selon la revendication 4, **caractérisé en ce qu'**un dispositif antiretour (46, 48) est agencé entre le ressort de traction (42) et le moyen de traction (28).

6. Module de retenue selon la revendication 5, **caractérisé en ce que** le ressort de traction (42) est agencé dans un cylindre creux (40), **en ce que** le dispositif antiretour présente un cône (46), et **en ce qu'**un anneau de blocage (48) est agencé sur le cône de telle sorte que dans le cas d'un mouvement du cône (46) dans le sens d'un allongement du ressort de traction (42), il se coince entre la paroi du cylindre creux (40) et le cône (46).

7. Module de retenue selon l'une des revendications 1 à 3, **caractérisé en ce que** le dispositif de tension présente une roue de turbine (52) qui est accouplée à une vis d'avance (56), et **en ce que** sur la vis d'avance (56) est agencé un écrou (58) auquel est raccordé le moyen de traction (28).

8. Module de retenue selon la revendication 7, **caractérisé en ce que** la roue de turbine (52) est agencée dans un cylindre creux (50) qui est en liaison d'écoulement avec la source de gaz sous pression, et **en ce que** le cylindre creux (50) présente une conduite d'évacuation (62, 66) pour le gaz sous pression s'écoulant à travers la roue de turbine (52).
